# EUROPEAN PATENT SPECIFICATION

(11) **EP 4 425 017 B1**
(45) Date of publication and mention of the grant of the patent: **25.03.2026**
(21) Application number: 23159684.2
(22) Date of filing: 02.03.2023
(51) Int. Cl.: F16J 15/08, F16C 43/04, F16J 15/06, F16C 33/78

(54) **SEALING GASKET AND VEHICLE COMPRISING SUCH A SEALING GASKET**
DICHTUNG UND FAHRZEUG MIT EINER SOLCHEN DICHTUNG
JOINT D'ÉTANCHÉITÉ ET VÉHICULE COMPRENANT UN TEL JOINT D'ÉTANCHÉITÉ

(43) Date of publication of application: 04.09.2024
(73) Proprietor: Volvo Truck Corporation, 405 08 Göteborg (SE)
(72) Inventor: BOST, Raphael, 69780 TOUSSIEU (FR)
(74) Representative: Lavoix

(56) References cited:
- EP-A1- 1 264 126
- DE-A1- 102021 103 963
- GB-A- 2 330 182
- US-A1- 2006 103 078
- US-A1- 2011 148 049

## Description

### TECHNICAL FIELD

The disclosure relates generally to gaskets. In particular aspects, the disclosure relates to a sealing gasket and a vehicle comprising such a sealing gasket. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Sealing gaskets, to prevent fluid form leaking are known. Some types of sealing gaskets include two parts, an outer part surrounding an inner part, the outer part and the inner part being connected via connecting tabs. In these cases, the outer part and/or the inner part each have two flat surfaces coated with a layer forming a seal on either surface. These gaskets, while offering satisfactory results in terms of sealing capabilities, use a lot of sealing material, as the entirety of the two surfaces of the outer part and/or the inner part need to be coated in sealing material.

However, having a seal that covers only partially the surfaces is difficult to achieve on flat surfaces, and such a seal will be easily removable, or will be susceptible to damage when the gasket is in use, reducing its durability. Examples of sealing gaskets include the ones described in US2011/148049 and in GB2330182 A. Therefore, it is necessary to have a seal that is not easily removed when the gasket is used and will ensure a long shelf life of the gasket. DE102021103963 A1 describes a gear device, with a spacer and a shim in contact with a bearing. However, such a device might be prone to leakage, and there is therefore a need to prevent leakage from happening around the bearing.

### SUMMARY

The aim of the invention is to have a sealing gasket, comprising a seal that will not be removed or damaged easily when it is used.

According to a first aspect of the disclosure, the invention relates to a vehicle, comprising:
- a first carter;
- a second carter, facing the first carter according to a first axis;
- a bearing, received inside a cavity of the first carter and facing the second carter along the first axis;
- a shim, interposed between the bearing and the second carter along the first axis; wherein the vehicle further comprises a sealing gasket, comprising:
- an outer flange, wherein the outer flange is essentially flat, comprising a first surface and a second surface, parallel to the first surface and comprising a first opening, centered on a first opening axis, wherein said first opening is ringed by an inside edge of the outer flange, connecting the first surface and the second surface;
- an inner flange, wherein the inner flange is flat, is arranged inside the first opening and at a distance from the inside edge and wherein the inner flange is connected to the outer flange through at least one junction tab, the inner flange, the outer flange and each junction tab being made of metal; and
- a seal, made of elastomer, provided on the inside edge and protruding from the first surface and the second surface,
wherein the outer flange is interposed between the first carter and the second carter along the first axis and the inner flange is interposed between the shim and the second carter along the first axis and wherein the inner flange exerts a load on the shim, which in turn exerts a load on the bearing.

The first aspect of the disclosure may seek to ensure that the seal is not easily damaged when the gasket is used.

A technical benefit may include that the gasket is easy to manufacture and that the seal is durable as it is well secured to the outer flange of the sealing gasket, by being provided on the inside edge, as well as keeping its sealing effect by protruding on the first and second surfaces.

In some examples, including in at least one preferred example, optionally the outer flange, the inner flange and each junction tab are integrally formed with each other. A technical benefit may include easier manufacturing, by eliminating assembly of the outer flange, the inner flange and each junction tab.

In some examples, including in at least one preferred example, optionally the seal is in the form of a bead and extends on the first surface and the second surface. A technical benefit may include a better sealing effect.

In some examples, including in at least one preferred example, optionally the inside edge forms a bead, integrally formed with the outer flange and the seal is provided on the bead. A technical benefit may include that a smaller quantity of seal is used.

In some examples, including in at least one preferred example, optionally each junction tab extends from the inside edge to the inner flange. A technical benefit may include that the junction tabs do not affect sealing.

In some examples, including in at least one preferred example, optionally the inner flange comprises a second opening coaxial to the first opening. A technical benefit may include that an object can be positioned coaxial to both openings.

In some examples, including in at least one preferred example, optionally the second opening is circular. A technical benefit may include that the gasket can be used with other circular objects that also have a circular opening.

In some examples, including in at least one preferred example, several junction tabs are provided, being regularly spaced around the first opening axis . A technical benefit may include that the inner flange's properties, such as rigidity are homogeneous around the first opening axis, and easier deposition of the seal.

In some examples, including in at least one preferred example, optionally the first opening is circular. A technical benefit may include easier manufacturing of the gasket.

In some examples, including in at least one preferred example, optionally the inner flange has an annular shape. A technical benefit may include that the inner flange can be interposed between objects that have an annular form without protruding.

In some examples, including in at least one preferred example, the outer flange further comprises at least one additional hole configured for receiving a fastener. A technical benefit may include that the gasket can be fastened to a surface.

In some examples, including in at least one preferred example, the outer flange further comprises a coating. A technical benefit may include that the outer flange has additional properties not achievable if the outer flange is an uncoated metal.

In some examples, including in at least one preferred example, optionally the coating is an elastomeric coating. A technical benefit may include increasing the sealing effect of the gasket.

In some examples, including in at least one preferred example, optionally each junction tab has a thickness, measured along the first opening axis, comprised between 0.3 and 1 millimeters, preferably between 0.5 and 0.7 millimeters. A technical benefit may include that the junction tabs are rigid enough to support the inner flange and additional load while limiting their thickness.

In some examples, including in at least one preferred example, a thickness measured from the first surface to the second surface along the first opening axis is comprised between 1 and 1.5 millimeters, preferably between 1.1 and 1.3 millimeters. A technical benefit may include that the gasket can be inserted into a space to properly seal the space.

In some examples, including in at least one preferred example, optionally the gasket is fastened to the first carter by screws. A technical benefit may include that the gasket is less likely to move and will seal more efficiently.

In some examples, including in at least one preferred example, optionally the first carter contains oil and the gasket is oil-tight. A technical benefit may include preventing leaking of oil in the vehicle.

In some examples, including in at least one preferred example, optionally the gasket is watertight. A technical benefit may include preventing water from penetrating inside the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view of a vehicle and an exploded view of a part of a vehicle according to an example.
**FIG. 2** is a cross sectional view of the part of the vehicle of **FIG. 1****.**
**FIG. 3** is a perspective view of a gasket shown on **FIG. 1****.**
**FIG. 4** is a cross sectional view of the gasket of **FIG. 3** along the AA' plane of **FIG. 3****.**
**FIG 5****.** is a view similar to **FIG. 4****,** showing a gasket according to another example.

### DETAILED DESCRIPTION

The detailed description set forth below provides information and examples of the disclosed technology with sufficient detail to enable those skilled in the art to practice the disclosure.

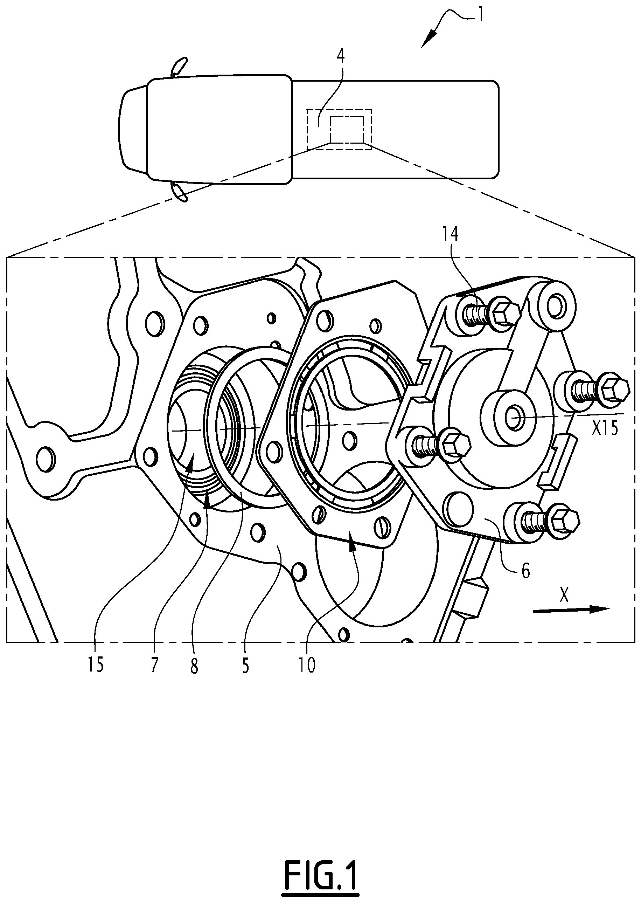

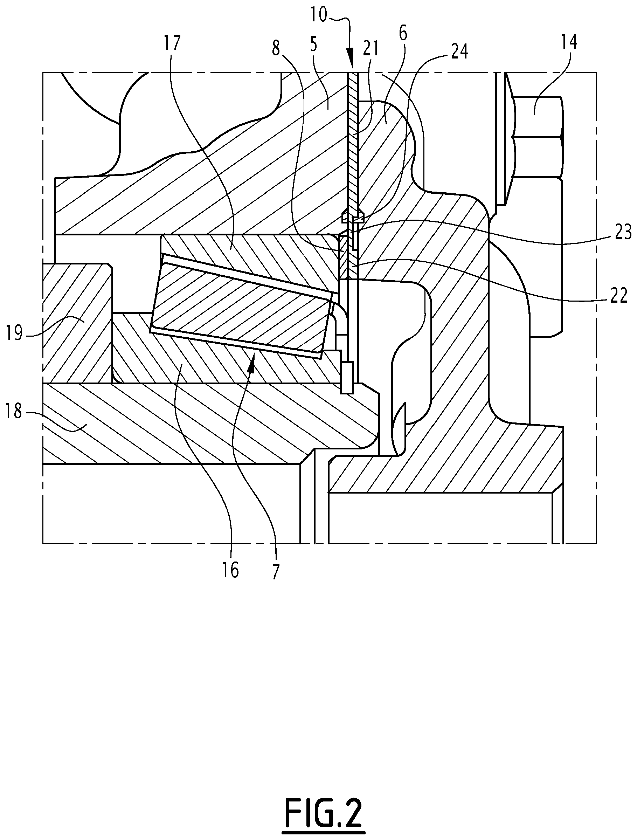

A detail of a vehicle 1 is shown in Figures 1 and 2. The vehicle 1 is for example, a truck, a bus, or a construction equipment. The vehicle 1 may be a thermal vehicle or an electrical vehicle. The vehicle 1 is very schematically represented in Figure 1 and comprises a gearbox 4. The gearbox 4 comprises a first carter 5, a second carter 6, a bearing 7, a shim 8 and a sealing gasket 10, also called gasket 10 hereafter.

The first and second carters 5 and 6 face each other along a first axis X. The first carter 5 may contain oil, which can be at risk of leaking out of the first carter 5.

The first carter 5 comprises a cavity 15, extending along a cavity axis X15, parallel to the first axis X. The cavity 15 receives the bearing 7 and the shim 8. The bearing 7 may be a tapered roller bearing as shown in figure 2, but the bearing 7 may alternatively be a ball bearing, or any other type of rolling-element bearing. Here, the bearing 7 comprises an inner race 16 and an outer race 17. The inner race 16 is mounted on an axle 18, shown in figure 2. The axle 18 is received in the cavity 15 and is coaxial to the cavity 15. The axle 18 may comprise a bushing 19, preventing the bearing 7 from moving along the axle 18 along the axis X15. The outer race 17 is in contact with the shim 8 along the first axis X. The shim 8 is circular, with a central opening centered on the cavity axis X15, so that the shim 8 is in contact with only the outer race 17 of the bearing 7.

The second carter 6 may face the cavity 15, and in particular the bearing 7, along the first axis X. In particular, the second carter 6 may cover the cavity 15 and the bearing 7 to protect the bearing 7 from outside elements. The second carter 6 may also prevent the bearing 7 from moving along the axis X15 and falling from the cavity 15. In order to do so, the second carter 6 is fixed to the first carter 5, using screws 14. In other examples, not represented, the second carter 6 is fixed to the first carter 5 by fasteners other than screws 14.

The gasket 10 is interposed between the shim 8 and the first carter 5 on a first side, and the second carter 6 on another side along the first axis X. The gasket 10 may be received in a recess of the first carter 5, surrounding the cavity 15, in order to facilitate correct positioning. The gasket 10 is used to seal a space between the first and second carters 5 and 6, and thus ensures that no leakage, for example of oil, is possible from the first carter 5 to an outside of the first carter 5. The gasket 10 is also used to apply a load on the shim 8. The load applied by the gasket 10 on the shim 8 is applied along the axis X15, in the direction of the gasket 10 to the shim 8. The outer race 17 of the bearing 7 is loaded along the axis X15 in order to block any movement of the bearing 7 along the axis X15 that could be caused by play.

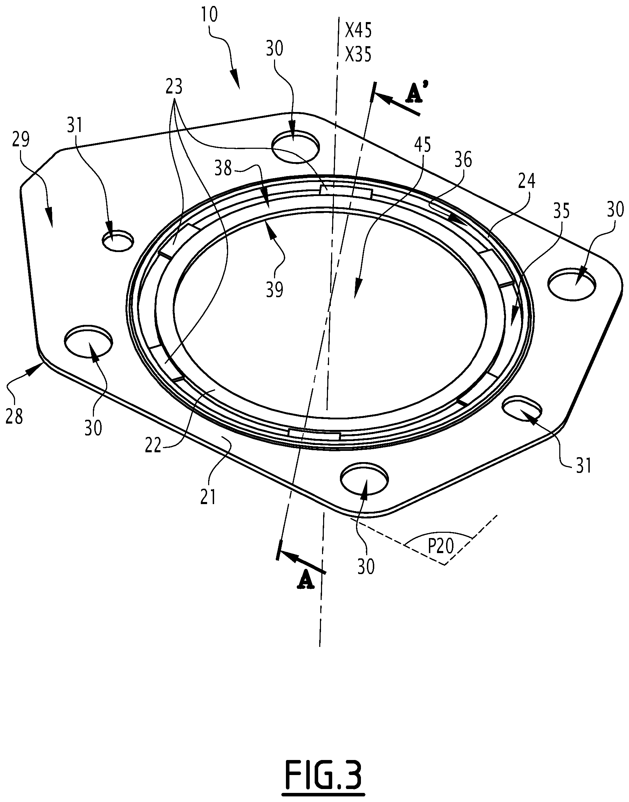

The gasket 10 is shown alone on Figure 3. To fulfill properly the sealing and the loading function, the gasket 10 comprises an outer flange 21, an inner flange 22, junction tabs 23 and a seal 24. Alternatively, the gasket 10 comprises one junction tab 23. In any case, the gasket 10 comprises at least one junction tab 23. The gasket 10 is essentially flat and extends along a plane P20. The outer flange 21 is flat, and has a first surface 28 extending along the plane P20 and a second surface 29 parallel to the first surface 28. When the gasket 10 is in use, the outer flange 21 is interposed between the first carter 5 and the second carter 6 along the axis X15. The outer flange 21 comprises through holes 30 and 31, extending from the surface 28 to the surface 29 and configured for receiving respective fasteners. Such fasteners may be the screws 14 used to fasten the first and the second carter 5 and 6 together, screws 14 which are then also used to fasten the gasket 10 to the first carter 5. Alternatively, the fasteners may be other fasteners that solely fasten the gasket 10 to the first carter 5. As a variant, a combination of both types of fasteners may be used. In the examples shown in figures 1 to 3, the outer flange 21 comprises four holes 30 for receiving the screws 14, and two holes 31 for receiving other fasteners, not shown. The outer flange 21 may also comprise only one hole 30 or 31.

The outer flange 21 further comprises a first opening 35, centered on a first opening axis X35. The first opening 35 is circular in the examples represented, however in other examples, the first opening 35 may be of a different shape. The first opening 35 extends through the outer flange 21, from the first surface 28 to the second surface 29, and an inside edge 36, ringing the first opening 35, connects the first and second surfaces 28 and 29. The inside edge 36 is flat, in that, for any cross-section of the inside edge 36 along a plane containing the first opening axis X35, the cross-section of the inside edge 36 is parallel to the first opening axis X35. The inside edge 36 further faces the first opening axis X35.

The outer flange 21 may have a thickness, measured from the first surface 28 to the second surface 29 along the first opening axis X35, comprised between 1 and 1.5 millimeters, preferably between 1.1 and 1.3 millimeters. Typically, the outer flange 21 is made of metal such as stainless steel.

The inner flange 22 is located inside the first opening 35. When the gasket 10 is in use, the inner flange 22 is interposed between the shim 8 and the second carter 6 along the axis X15. The inner flange 22 is made of metal, such as stainless steel, is flat, and located at a distance from the inside edge 36, such that the inner flange 22 and the inside edge 36 are not in contact. In the example of figures 1 to 3, the first opening 35 is circular and the inner flange 22 is also circular, to maintain a constant distance between the inner flange 22 and the inside edge 36. The inner flange 22 may have a first surface 38 extending along the first plane P20 and a second surface 39 extending parallel to the first surface 38.

The inner flange 22 may comprise a second opening 45, as shown in the figures 1 to 3. The opening 45 may be circular and centered on a second axis X45, and coaxial with the first opening 35. Thus, the axes X35 and X45 coincide here. A diameter of the second opening 45 may be equal to a diameter of the shim 8. In some examples, and as shown in the figures 1 to 3, the inner flange 22 and the second opening 45 are both circular, making the inner flange 22 annular in shape. The inner flange 22 is rigid enough not to deform when the inner flange 22 is pressed against the shim 8 and applies load to the bearing 7.

The junction tabs 23 connect the inner flange 22 and the outer flange 21 to each other. In the examples depicted by the figures 1 to 3, the gasket 10 comprises six junction tabs 23. Each junction tab 23 is flat, parallel to the plane P20 and extends from the inside edge 36 to the inner flange 22. The junction tabs 23 may be regularly spaced around the first opening axis X35, so that the properties of the inner flange 22 properties, such as rigidity, are homogeneous around the first opening axis X35. The junction tabs 23 are rigid enough not to deform when the inner flange 22 is pressed against the shim 8 and applies load to the bearing 7. The junction tabs 23 may have a thickness, measured along the axis X35, comprised between 0.3 and 1 millimeters, preferably between 0.5 and 0.7 millimeters

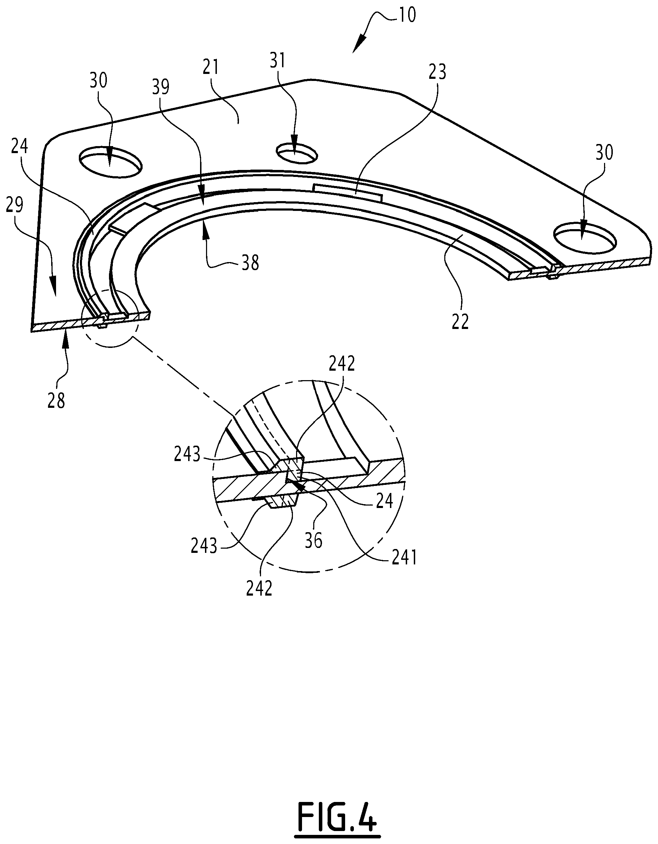

The outer flange 21, inner flange 22 and junction tabs 23 are preferably formed integrally with each other, for example by being stamped from the same initial piece of metal. The first surfaces 28 and 38 of the outer flange 21 and inner flange 22 may be level with each other and the second surfaces 29 and 39 of the outer flange 21 and the inner flange 22 may be level with each other, as shown in figure 4.

The seal 24 is provided on the inside edge 36 of the outer flange 21. The seal 24 comprises an inside edge portion 241, two protruding portions 242 and two surface portions 243. The inside edge portion 241 is located on the inside edge 36 of the outer flange 21. The inside edge is also in contact with a portion of each junction tab 23, where each junction tab 23 extends from the inside edge 36. The protruding portions 242 protrude from the first and second surfaces 28 and 29. The two surface portions 243 extend from the protruding portions 242 on the first and second surfaces 28 and 29. The seal 24 is, in this example, in the shape of a bead around the inside edge 36, protruding from the first and second surfaces 28 and 29 and extending on the first and second surfaces 28 and 29. As another example, not shown, the seal 24 only comprises the inside edge portion 241 and the two protruding portions 242.

The fact that the seal 24, in particular the inside edge portion 241 is provided on the inside edge 36 of the outer flange 21 allows for the seal 24 to be deposited on the outer flange 21 more easily, for example by injection molding, while being difficult to remove or damage during use. The two surface portions 243 in particular may further decrease the risk of removing or damaging the seal 24. The use of junction tabs 23, regularly spaced around the inner flange 22, also enable easier deposition and better resistance to damage of the seal 24. The seal 24 is an elastomer, for example acrylonitrile butadiene rubber, also called nitrile or NBR, hydrogenated nitrile butadiene rubber, or silicone. Thus, the seal 24 is oil-resistant. The seal 24 may also be water-resistant, so that the gasket is respectively oil-tight or water-tight. The seal 24 may be both water-and-oil-tight, and/or made of an elastomer resistant to other liquids.

When the gasket 10 is in use in the vehicle 1, first opening axis X35 and the cavity axis X15 coincide. The seal 24 is interposed between the first and second carters 5 and 6 and has a sealing effect between the first and second carters 5 and 6, for example through the elastic deformation of the seal 24. Thus, liquid, such as oil, that may leak from the first carter 5, is unable to spread past the gasket 10. Optionally, if the gasket 10 is water-tight, water, for example coming from outside the vehicle 1 is unable to penetrate to the first and second carters 5 and 6 and reach the bearing 7.

As an addition that may be combined with the previously described examples, the outer flange 21 may comprise a coating on either surface 28 or 29, or alternatively, on both surfaces 28 and 29. Such coating may be an elastomeric coating, made for example of nitrile or silicone. Such coating may be water and/or oil tight, and/or may increase a sealing effect between the outer flange 21 and the first and second carters 5 and 6, thus reinforcing the sealing effect of the gasket 10.

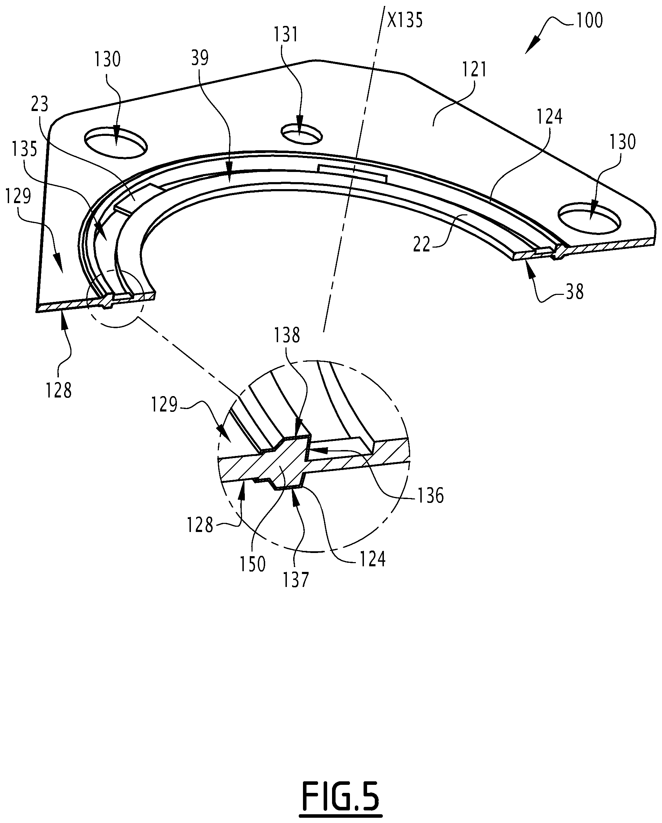

Figure 5 shows a gasket 100 according to another example. Aspects of the gasket 100 that are identical to the gasket 10 described in figures 1 to 4 are referenced with the same reference numbers and are not discussed again. The gasket 100 may be used in an identical manner than the gasket 10 in the vehicle 1.

The gasket 100 of figure 5 differs from the example gasket 10 shown in figure 4 in that an outer flange 121 replaces the outer flange 21 and that a seal 124 replaces the seal 24. The outer flange 121 comprises a first surface 128, a second surface 129, holes 130 and 131, a first opening 135 and an inside edge 136. The first surface 128, second surface 129, holes 130 and 131 and the first opening 135 are respectively similar to the first surface 28, the second surface 29, the holes 30 and 31 and the first opening 35 of the outer flange 21. The first opening 135 is centered along a first opening axis X135. The inside edge 136 connects the first and second surfaces 128 and 129, but is not flat like the inside edge 36 of the outer flange 21. The inside edge 136 comprises a portion that does face the first opening axis X135, similar to the inside edge 36, but also comprises two portions 137 and 138 that do not face the first opening axis X135 but are parallel to the opening 135, and that protrude from the first and second surfaces 128 and 129. The inside edge 136 thus forms a bead 150. The bead 150 is formed integrally with the outer flange 121, inner flange 22 and junction tabs 23, and may be thus made of metal. Thus, the outer flange 121 is essentially flat, as the first and second surfaces 128 and 129 are still parallel to each other but the bead 150 protrudes from the first and second surfaces 128 and 129 along the axis X135.

The seal 124 is made of the same material as the seal 24. The seal 124 differs from the seal 24 in that it is a layer that covers the inside edge 136, or in other words, that covers the bead 150. As the bead 150 protrudes from the first and second surfaces 128 and 129, the seal 124 protrudes from the first and second surfaces 128 and 129. As an alternative that is not shown, the seal 124 may extend on the first and second surfaces 128 and 129.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle (1), comprising:
- a first carter (5);
- a second carter (6), facing the first carter (5) according to a first axis (X);
- a bearing (7), received inside a cavity (15) of the first carter (5) and facing the second carter (6) along the first axis (X);
- a shim (8), interposed between the bearing (7) and the second carter (6) along the first axis (X);
wherein the vehicle further comprises a sealing gasket (10; 100), comprising:
- an outer flange (21; 121), wherein the outer flange (21; 121) is essentially flat, comprising a first surface (28; 128) and a second surface (29; 129), parallel to the first surface (28; 128) and comprising a first opening (35; 135), centered on a first opening axis (X35; X135), wherein said first opening (35; 135) is ringed by an inside edge (36; 136) of the outer flange (21; 121), connecting the first surface (28; 128) and the second surface (29; 129);
- an inner flange (22), wherein the inner flange (22) is flat, is arranged inside the first opening (35) and at a distance from the inside edge (36; 136) and wherein the inner flange (22) is connected to the outer flange (21; 121) through at least one junction tab (23), the inner flange (22), the outer flange (21; 121) and each junction tab (23) being made of metal; and
- a seal (24; 124), made of elastomer, provided on the inside edge (36; 136) and protruding from the first surface (28; 128) and the second surface (29; 129),
wherein the outer flange (21; 121) is interposed between the first carter (5) and the second carter (6) along the first axis (X) and the inner flange (22) is interposed between the shim (8) and the second carter (6) along the first axis (X) and wherein the inner flange (22) exerts a load on the shim (8), which in turn exerts a load on the bearing (7).

2. The vehicle (1) of claim 1, wherein the outer flange (21; 121), the inner flange (22) and each junction tab (23) are integrally formed with each other.

3. The vehicle (1) according to any of the claims 1 to 2, wherein the seal (24) is in the form of a bead and extends on the first surface (28) and the second surface (29).

4. The vehicle (1) according to any of the claims 1 to 2, wherein the inside edge (136) forms a bead (150), integrally formed with the outer flange (121) and the seal (124) is provided on the bead (150).

5. The vehicle (1) according to any of the claims 1 to 4, wherein each junction tab (23) extends from the inside edge (36; 136) to the inner flange (22).

6. The vehicle (1) according to any of claims 1 to 5, wherein the inner flange (22) comprises a second opening (45) coaxial to the first opening (35; 135).

7. The vehicle (1) according to claim 6, wherein the second opening (45) is circular.

8. The vehicle (1) according to any of the claims 1 to 7, wherein the at least one junction tab (23) includes several junction tabs (23) which are regularly spaced around the first opening axis (X35; X135).

9. The vehicle (1) according to any of the claims 1 to 8, wherein the first opening (35; 135) is circular.

10. The vehicle (1) according to any of the claims 1 to 9, wherein the inner flange (22) has an annular shape.

11. The vehicle (1) according to any of the claims 1 to 10, wherein the outer flange (21; 121) further comprises a coating.

12. The vehicle (1) according any of claims 1 to 11, wherein the gasket (10; 100) is fastened to the first carter (5) by screws (14).

13. The vehicle (1) according to any of the claims 1 to 12, wherein the first carter (5) contains oil and the gasket (10; 100) is oil-tight.

14. The vehicle (1) according to any of the claims 1 to 12, wherein the gasket (10; 100) is water-tight.

## Patentansprüche

1. Fahrzeug (1), umfassend:
- ein erstes Gehäuse (5);
- ein zweites Gehäuse (6), das dem ersten Gehäuse (5) in einer ersten Achse (X) zugewandt ist;
- ein Lager (7), das in einem Hohlraum (15) des ersten Gehäuses (5) aufgenommen ist und dem zweiten Gehäuse (6) entlang der ersten Achse (X) zugewandt ist;
- eine Unterlegscheibe (8), die zwischen das Lager (7) und das zweite Gehäuse (6) entlang der ersten Achse (X) eingefügt ist;
wobei
das Fahrzeug umfasst ferner eine Dichtung (10; 100), umfassend:
- einen äußeren Flansch (21; 121), wobei der äußere Flansch (21; 121) im Wesentlichen flach ist, umfassend eine erste Oberfläche (28; 128) und eine zweite Oberfläche (29; 129) parallel zu der ersten Oberfläche (28; 128), und umfassend eine erste Öffnung (35; 135), die auf einer ersten Öffnungsachse (X35; X135) zentriert ist, wobei die erste Öffnung (35; 135) von einem inneren Rand (36; 136) des äußeren Flanschs (21; 121) umgeben ist, der die erste Oberfläche (28; 128) und die zweite Oberfläche (29; 129) verbindet;
- einen inneren Flansch (22), wobei der innere Flansch (22) flach ist, innerhalb der ersten Öffnung (35) und in einem Abstand von dem inneren Rand (36; 136) angeordnet ist und wobei der innere Flansch (22) durch mindestens eine Verbindungslasche (23) mit dem äußeren Flansch (21; 121) verbunden ist, wobei der innere Flansch (22), der äußere Flansch (21; 121) und jede Verbindungslasche (23) aus Metall gefertigt sind; und
- eine Dichtung (24; 124), die aus Elastomer gefertigt ist, die an dem inneren Rand (36; 136) bereitgestellt ist und von der ersten Fläche (28; 128) und der zweiten Fläche (29; 129) hervorsteht,
wobei der äußere Flansch (21; 121) zwischen dem ersten Gehäuse (5) und dem zweiten Gehäuse (6) entlang der ersten Achse (X) angeordnet ist und der innere Flansch (22) zwischen die Unterlegscheibe (8) und das zweiten Gehäuse (6) entlang der ersten Achse (X) eingefügt ist und wobei der innere Flansch (22) eine Last auf die Unterlegscheibe (8) ausübt, die ihrerseits eine Last auf das Lager (7) ausübt.

2. Fahrzeug (1) nach Anspruch 1, wobei der äußere Flansch (21; 121), der innere Flansch (22) und jede Verbindungslasche (23) einstückig miteinander gebildet sind.

3. Fahrzeug (1) nach einem der Ansprüche 1 bis 2, wobei die Dichtung (24) die Form eines Wulsts aufweist und sich auf der ersten Fläche (28) und der zweiten Fläche (29) erstreckt.

4. Fahrzeug (1) nach einem der Ansprüche 1 bis 2, wobei der innere Rand (136) einen Wulst (150) bildet, der einstückig mit dem äußeren Flansch (121) gebildet ist, und die Dichtung (124) an dem Wulst (150) bereitgestellt ist.

5. Fahrzeug (1) nach einem der Ansprüche 1 bis 4, wobei sich jede Verbindungslasche (23) von dem inneren Rand (36; 136) zu dem inneren Flansch (22) erstreckt.

6. Fahrzeug (1) nach einem der Ansprüche 1 bis 5, wobei der innere Flansch (22) eine zweite Öffnung (45) umfasst, die koaxial zu der ersten Öffnung (35; 135) ist.

7. Fahrzeug (1) nach Anspruch 6, wobei die zweite Öffnung (45) kreisförmig ist.

8. Fahrzeug (1) nach einem der Ansprüche 1 bis 7, wobei die mindestens eine Verbindungslasche (23) mehrere Verbindungslaschen (23) beinhaltet, die regelmäßig um die erste Öffnungsachse (X35; X135) beabstandet sind.

9. Fahrzeug (1) nach einem der Ansprüche 1 bis 8, wobei die erste Öffnung (35; 135) kreisförmig ist.

10. Fahrzeug (1) nach einem der Ansprüche 1 bis 9, wobei der innere Flansch (22) eine Ringform aufweist.

11. Fahrzeug (1) nach einem der Ansprüche 1 bis 10, wobei der äußere Flansch (21; 121) ferner eine Beschichtung umfasst.

12. Fahrzeug (1) nach einem der Ansprüche 1 bis 11, wobei die Dichtung (10; 100) mit Schrauben (14) an dem ersten Gehäuse (5) befestigt ist.

13. Fahrzeug (1) nach einem der Ansprüche 1 bis 12, wobei das erste Gehäuse (5) Öl enthält und die Dichtung (10; 100) öldicht ist.

14. Fahrzeug (1) nach einem der Ansprüche 1 bis 12, wobei die Dichtung (10; 100) wasserdicht ist.

## Revendications

1. Véhicule (1), comprenant :
- un premier carter (5) ;
- un second carter (6), faisant face au premier carter (5) selon un premier axe (X) ;
- un palier (7), reçu à l'intérieur d'une cavité (15) du premier carter (5) et faisant face au second carter (6) le long du premier axe (X) ;
- une cale (8), interposée entre le palier (7) et le second carter (6) le long du premier axe (X) ;
dans lequel
le véhicule comprend en outre un joint d'étanchéité (10 ; 100), comprenant :
- une bride extérieure (21 ; 121), dans lequel la bride extérieure (21 ; 121) est essentiellement plate, comprenant une première surface (28 ; 128) et une seconde surface (29 ; 129), parallèle à la première surface (28 ; 128) et comprenant une première ouverture (35 ; 135), centrée sur un axe de première ouverture (X35 ; X135), dans lequel ladite première ouverture (35 ; 135) est entourée d'un bord intérieur (36 ; 136) de la bride extérieure (21 ; 121), reliant la première surface (28 ; 128) et la seconde surface (29 ; 129) ;
- une bride intérieure (22), dans lequel la bride intérieure (22) est plate, est disposée à l'intérieur de la première ouverture (35) et à une certaine distance du bord intérieur (36 ; 136) et dans lequel la bride intérieure (22) est reliée à la bride extérieure (21 ; 121) par au moins une languette de jonction (23), la bride intérieure (22), la bride extérieure (21 ; 121) et chaque languette de jonction (23) étant en métal ; et
- un joint (24 ; 124), en élastomère, placé sur le bord intérieur (36 ; 136) et faisant saillie sur la première surface (28 ; 128) et la seconde surface (29 ; 129),
dans lequel la bride extérieure (21 ; 121) est interposée entre le premier carter (5) et le second carter (6) le long du premier axe (X) et la bride intérieure (22) est interposée entre la cale (8) et le second carter (6) le long du premier axe (X) et dans lequel la bride intérieure (22) exerce une charge sur la cale (8), qui à son tour exerce une charge sur le palier (7).

2. Véhicule (1) selon la revendication 1, dans lequel la bride extérieure (21 ; 121), la bride intérieure (22) et chaque languette de jonction (23) sont formées d'un seul tenant les unes avec les autres.

3. Véhicule (1) selon l'une quelconque des revendications 1 à 2, dans lequel le joint (24) se présente sous la forme d'une baguette et s'étend sur la première surface (28) et la seconde surface (29).

4. Véhicule (1) selon l'une quelconque des revendications 1 à 2, dans lequel le bord intérieur (136) forme une baguette (150), formé d'un seul tenant avec la bride extérieure (121) et le joint (124) est disposé sur la baguette (150).

5. Véhicule (1) selon l'une quelconque des revendications 1 à 4, dans lequel chaque languette de jonction (23) s'étend du bord intérieur (36 ; 136) jusqu'à la bride intérieure (22).

6. Véhicule (1) selon l'une quelconque des revendications 1 à 5, dans lequel la bride intérieure (22) comprend une seconde ouverture (45) coaxiale à la première ouverture (35 ; 135).

7. Véhicule (1) selon la revendication 6, dans lequel la seconde ouverture (45) est circulaire.

8. Véhicule (1) selon l'une quelconque des revendications 1 à 7, dans lequel l'au moins une languette de jonction (23) comprend plusieurs languettes de jonction (23) qui sont régulièrement espacées autour de l'axe de première ouverture (X35 ; X135).

9. Véhicule (1) selon l'une quelconque des revendications 1 à 8, dans lequel la première ouverture (35 ; 135) est circulaire.

10. Véhicule (1) selon l'une quelconque des revendications 1 à 9, dans lequel la bride intérieure (22) a une forme annulaire.

11. Véhicule (1) selon l'une quelconque des revendications 1 à 10, dans lequel la bride extérieure (21 ; 121) comprend en outre un revêtement.

12. Véhicule (1) selon l'une quelconque des revendications 1 à 11, dans lequel le joint (10 ; 100) est fixé au premier carter (5) par des vis (14).

13. Véhicule (1) selon l'une quelconque des revendications 1 à 12, dans lequel le premier carter (5) contient de l'huile et le joint (10 ; 100) est étanche à l'huile.

14. Véhicule (1) selon l'une quelconque des revendications 1 à 12, dans lequel le joint (10 ; 100) est étanche à l'eau.
